(19) Europäisches Patentamt

European Patent Office

Office européen des brevets

(11) **EP 1 195 615 B1**

(12) **EUROPEAN PATENT SPECIFICATION**

(45) Date of publication and mention
of the grant of the patent:
**29.12.2004 Bulletin 2004/53**

(51) Int Cl.⁷: **G01S 5/16**, G01S 1/70

(21) Application number: **01122965.5**

(22) Date of filing: **25.09.2001**

(54) **Position determining system**

Vorrichtung zur Positionsbestimmung

Dispositif de localisation

(84) Designated Contracting States:
**CH DE LI SE**

(30) Priority: **06.10.2000 JP 2000307116**

(43) Date of publication of application:
**10.04.2002 Bulletin 2002/15**

(73) Proprietor: **KABUSHIKI KAISHA TOPCON**
**Tokyo (JP)**

(72) Inventors:
• **Ohtomo, Fumio**
**c/o KABUSHIKI KAISHA TOPCON**
**Tokyo (JP)**
• **Hayashi, Kunihiro**
**c/o KABUSHIKI KAISHA TOPCON**
**Tokyo (JP)**
• **Kodaira, Jun-ichi**
**c/o KABUSHIKI KAISHA TOPCON**
**Tokyo (JP)**
• **Osaragi, Kazuki**
**c/o KABUSHIKI KAISHA TOPCON**
**Tokyo (JP)**

(74) Representative:
**Kirschner, Klaus Dieter, Dipl.-Phys.**
**advotec.**
**Böck, Tappe, Kirschner**
**Patent- und Rechtsanwälte**
**Sollner Strasse 38**
**81479 München (DE)**

(56) References cited:
WO-A-00/22380          DE-A- 4 415 419
US-A- 3 687 556          US-A- 5 100 229
US-A- 5 884 239

**Description**

**FIELD OF THE INVENTION**

The present invention relates to a position determining system, and more particularly, it relates to a position determining system which includes at least two rotary laser devices emitting laser beams and a light sensor receiving the laser beams emitted from the rotary laser devices and which utilizes output from the light sensor to measure a position and determine a surface.

**PRIOR ART**

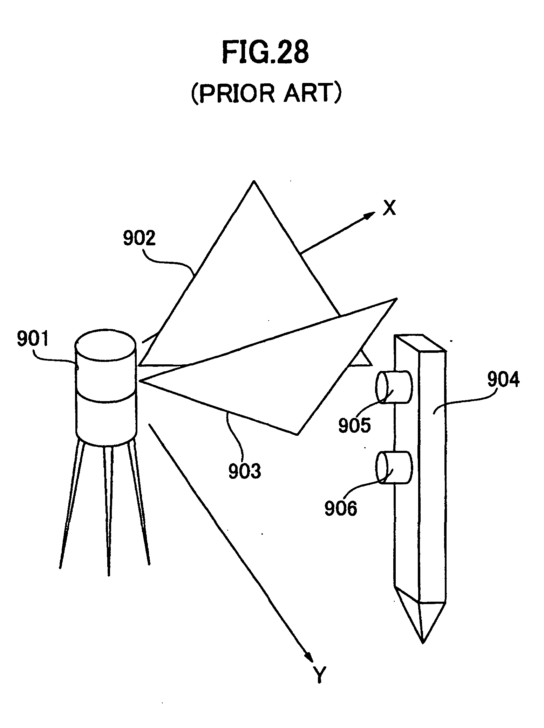

Japanese Patent Laid-Open No. H7-208990 discloses a three-dimensional coordinate determining apparatus having a light source rotating and emitting a plurality of planar beams, and a plurality of light feedback means. The three-dimensional coordinate determining apparatus, as shown in Fig. 28, uses two light feedback means 905 and 906 attached to a staff 904 to reflect diverging laser beams 902 and 903 emitted from a light source 901 and direct the beams upon the light source 901, so as to measure a three-dimensional coordinate of the light feedback means. The three-dimensional coordinate can be computed from a rotational angle of the light source upon the reception of the incident light reflected by the light feedback means, and from a dime delay between the receptions of the beams reflected from the light feedback means 905 and 906, respectively.

Japanese Patent Laid-Open No. S63-300905 discloses an apparatus used to determine a position of a movable object, which includes first and second light emitting means rotating and emitting rectilinearly progressing beams in a horizontal direction, and a light receiving means having light receiving elements to receive beams from the two light emitting means. The first light emitting means is provided with a light receiving element. The position determining apparatus determines an orientation at which the light receiving means is located, depending upon a ratio of a period of time from an instant when the light receiving element attached to the first light emitting means receives light emitted by the second light emitting means to an instant when the light receiving elements attached to the light receiving means receives light emitted from the second light emitting means, to a rotation cycle of the laser projector. Similarly, direction angles of the two laser projectors are respectively obtained, and a theory of triangulation applies to determine a position in the horizontal plane where the light receiving means lies.

The three-dimensional coordinate determining apparatus in Japanese Patent Laid-Open No. H7-208990 discloses a three-dimensional coordinate determining apparatus encounters a problem that orientations of the light feedback means 905 and 906 must be adjusted so that the beams reflected from the light feedback means 905 and 906 are assuredly re-directed on the light source 901. An operator has to move the staff 904 to pursue a required measurement procedure, and also another operator must join to manipulate the light source 901 because the reading of measurements is carried out on the light source 901. Thus, there arises an inconvenience that a single personnel is not sufficient to effect the manipulation of the three-dimensional coordinate determining apparatus.

The apparatus of determining a position of a movable object as disclosed in Japanese Patent Laid-Open No. S63-300905 must also overcome a disadvantage that errors of the measurements are caused due to uneven rotations of the laser projector because the position determining apparatus obtains an orientation at which the light receiving means is located, depending upon a ratio of a rotation cycle of the laser projector to a period of time from an instant when the light receiving element attached to the first light emitting means receives light emitted by the second light emitting means to an instant when the light receiving elements attached to the light receiving means receives light emitted from the second light emitting means. Hence, an expensive motor, such as hydraulic spindle motor, of reduced uneven rotations must be employed for a rotary drive mechanism in the laser projector, and the total cost of the apparatus is increased.

DE 44 15 419 A1 discloses a position measuring device in which a plurality of laser scanners is provided with each laser scanner emitting a beam along a particular axis. A photo receiver attached to an object the position of which is to be measured receives the beams while recoding the time-dependency thereof, and a determining unit determines the location of that object in dependency on the known positions of the laser scanners.

WO 00/22380 relates to a rotating head optical transmitter for a position measurement system. The optical transmitter includes, inter alia, an assembly including two optical sources that generate two diverging optical beams. An improved transmitter can even include two such pairs of optical source. The whole assembly is rotatable by means of a power source and a motor. The position measurement system in which two of these optical transmitters are used includes a portable detector unit detecting the beams and a synchronization signal.

Accordingly, it is an object of the present invention to provide a position determining system of reduced errors in measuring values and determining surfaces even if the rotary light source emitting laser beam rotates somehow unevenly.

It is another object of the present invention to provide a position determining system which permits a single operator to easily measure positions and determine surfaces.

In order to implement the above objects, the present invention provides a position determining system according to claim 1.

With such a configuration, the two rotary laser devices disposed separate from each other emit and rotate the laser beams. Directions in which the laser beams are emitted, namely, rotational positions can be detected by the encoder. The rotational positions detected by the encoder are signaled by means of transmitting means including light, electric waves, and so forth. The light sensor receives the rotating laser beams at its light receiving unit while receiving information on the rotational position transmitted by the transfer means. The light sensor computes a position where the light sensor lies, depending upon the information on the rotation position and the time intervals mentioned in claim 1, to measure a position or determine a phantom surface.

The light receiving unit (or units) may be shared between a use for the laser beams in detecting the elevation- or depression-angle of the light sensor and a use for the optical communication.

The light receiving unit of the light sensor preferably has a light converging means.

The transfer means for the optical communication may signal by modulating the rotating laser beams.

Preferably, the rotary laser devices have their respective reflecting means reflecting the laser beams emitted from the rotary light source, and light receiving means receiving the beams reflected from the reflecting means, and it determines a rotational reference position of the rotary light source from the timing detected by the light receiving means.

The rotary laser devices have their respective light receiving means and light emitting means, and preferably, it may transfer a signal from the light emitting means to the light sensor when the diverging laser beams emitted from the rotary laser devices fall on the light receiving means.

## BRIEF DESCRIPTION OF THE DRAWINGS

Fig. 1 is a perspective view showing the entire module of a first preferred embodiment of the present invention;

Fig. 2 is a perspective view showing a deployment of three diverging laser beams;

Fig. 3 illustrates three sides of the deployment of three diverging laser beams;

Fig. 4 is a side sectional view showing an inclining mechanism of a rotary laser device;

Fig. 5 is a side sectional view showing a laser projector incorporated in the rotary laser device;

Fig. 6 is a perspective view showing a way in which a single ray of laser beam is split into three diverging laser beams by a diffracting grating;

Fig. 7 is a perspective view showing a mutual positional relation among three diverging laser beams and laser beam carrying an angular signal;

Fig. 8 is a front view showing a light sensor;

Fig. 9 illustrates a whole vertical cross section of the light sensor;

Fig. 10 is a sectional view taken along the line X-X of Fig. 8;

Fig. 11 is a graph showing signals corresponding to the diverging laser beams incident upon the light sensor;

Fig. 12 is a graph showing signals carrying a rotational angular signal;

Fig. 13 is a diagram illustrating a principle of measuring a position in relation with the first preferred embodiment of the present invention;

Fig. 14 is a flow chart illustrating an operation procedure of producing a phantom surface by means of the first preferred embodiment of the present invention;

Fig. 15 is a perspective view showing a position relation of the phantom surface that is to be created, with the horizontal plane;

Fig. 16 is a partial enlarged view showing a light receiving means and a reflecting means incorporated in the rotary laser device;

Fig. 17 is a graph showing a relation between an intensity of light incident upon the light receiving means of the rotary laser device and the rotational angular position at which the laser beam is emitted;

Fig. 18 is a cross sectional view showing another embodiment of the laser projector incorporated in the rotary laser device;

Fig. 19 is a perspective view showing an embodiment of the laser projector that emits the diverging laser beams of varied polarizations from one another;

Fig. 20 is a graph illustrating the diverging laser beam incident upon the light sensor;

Fig. 21 is a perspective view showing the rotary laser device that emits three diverging laser beams and laser beam carrying an angular signal in varied directions from one another;

Fig. 22 is a perspective view showing the rotary laser device that emits two diverging laser beams;

Fig. 23 illustrates three sides of the deployment of two diverging laser beams;

Fig. 24 is a graph showing signals corresponding to the diverging laser beams incident upon the light sensor;

Fig. 25 is a diagram illustrating other examples of the diverging laser beams;

Fig. 26 is a front view and a partial sectional view showing an embodiment of a light sensor capable of omnidirectionally receiving light;

Fig. 27 is a front view and a sectional view showing a light sensor controller incorporated in the light sensor capable of omnidirectionally receiving light; and

Fig. 28 is a perspective view showing a whole module of the prior art three-dimensional coordinate determining apparatus.

## DETAILED DESCRIPTION OF PREFERRED EMBODIMENTS OF THE INVENTION

(1) Embodiment 1

(1. 1) Arrangement of Position Determining System

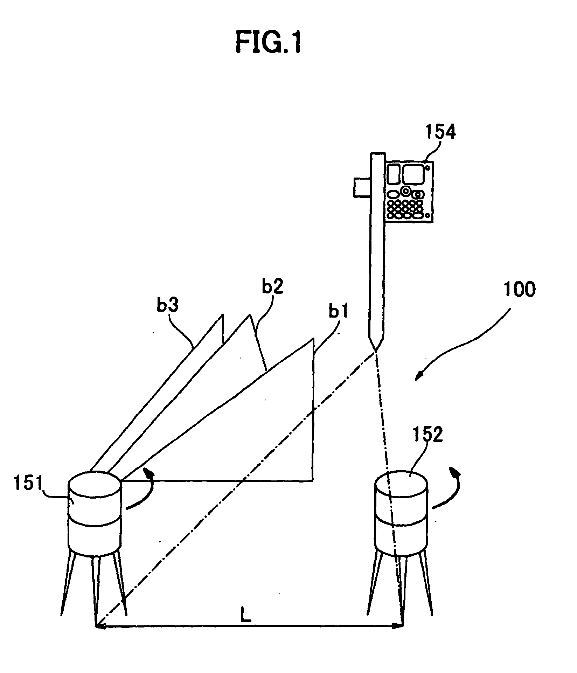

Fig. 1 illustrates an entire arrangement of a first preferred embodiment of a position determining System according to the present invention. The first embodiment of a position determining system 100 has two rotary laser devices 151 and 152 which includes a rotary light source rotating three diverging laser beams b1, b2, and b3, and a light receiving device 154 which receives the laser beams b1, b2, and b3 emitted by the rotary laser devices 151 and 152. Besides the three laser beams, the rotary laser devices 151 and 152 also respectively emit laser beams S which carry information on directions in which the rotary laser devices 151 and 152 emit the diverging laser beams.

(1. 1. 1) Rotary Laser Devices

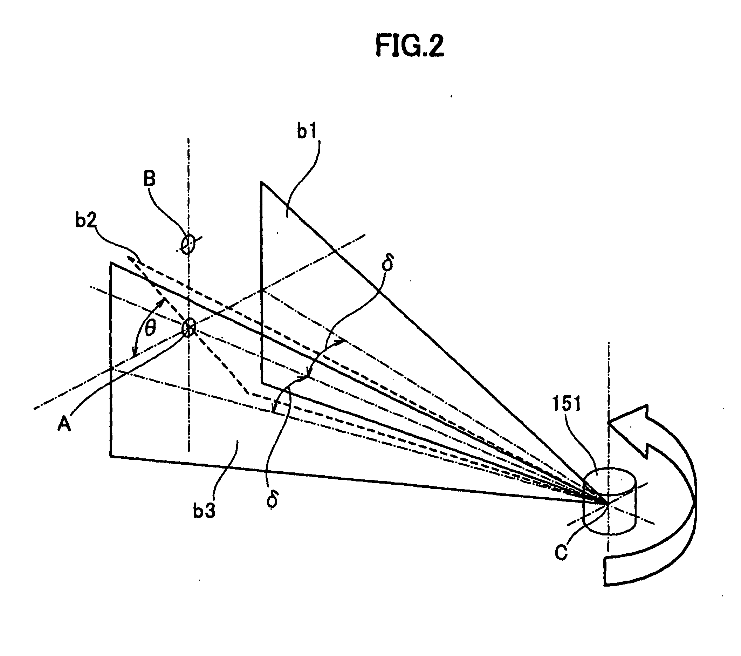

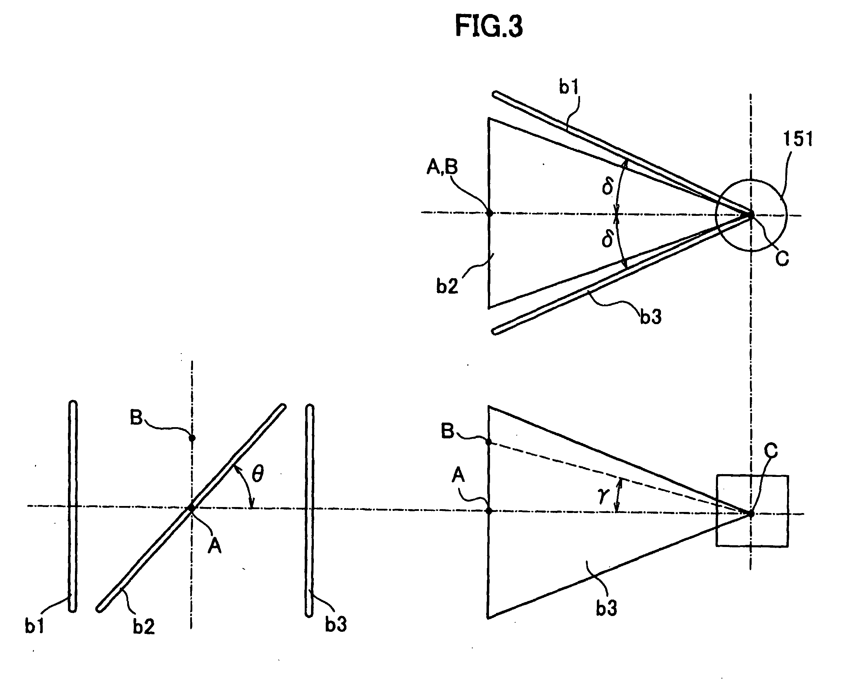

As illustrated in Fig. 2, the rotary laser device 151 emits the diverging beams b1, b2, and b3 while rotating them about a point C. As can be seen in Fig. 3, the diverging beams b1 and b3 are irradiated in directions perpendicular to a horizontal plane, respectively, while the diverging beam b2 is irradiated, meeting the horizontal plane at an angle θ. A cross line of the diverging beam b2 with the horizontal plane bisects an angle at which the diverging beam b1 meets the diverging beam b3. Specifically, an angle made between the cross line and the diverging beam 1 is equivalent to that made between the cross line and the diverging beam 3, being denoted by δ. Since the three diverging beams b1, b2, and b3 are rotated under the conditions as mentioned above, the diverging beams b1, b2, and b3 pass the light sensor 154 at varying points of time. The embodiments of the rotary laser devices 151 and 152 employed herein have the identical configuration, and hence, the rotary laser device 151 alone will be described below.

Then, a rotating mechanism that causes the three diverging beams to rotate will now be described.

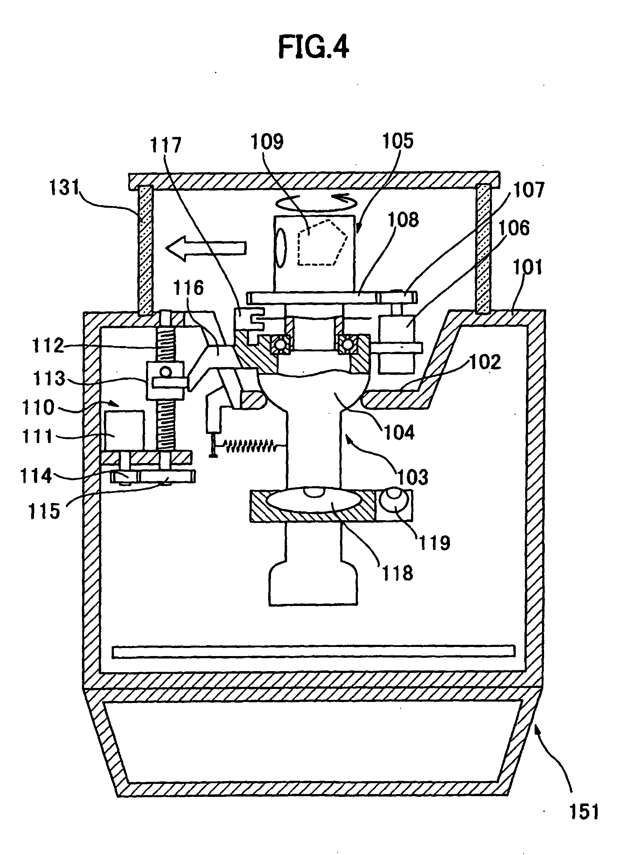

As shown in Fig. 4, the rotary laser device 151 according to the present invention has a casing 101 provided with a light projecting window 131, and a laser projector 103 serving as a rotary irradiating means. A concave 102 defined in a shape of truncated cone is provided in an upper center surface of the casing 101. The laser projector 103 extends vertically through the center of the concave 102. A spherical contact 104 seats in through the concave 102 so that the laser projector 103 can tilt. The laser projector 103 has a rotary unit 105 capable of rotating and including a pentaprism 109. A sweep motor 106 actuates the rotary unit 105 to rotate via power transmission by a drive gear 107 and a sweep gear 108. A rotation angle of the rotary unit 105 is detected by an encoder 117 mounted in the laser projector 103, and data on the detected rotation angle is signaled to the light sensor 154.

The rotary laser device 151 has two pairs of inclination mechanisms disposed around the laser projector 103 (only one of the pairs is shown). One of the pairs of the inclination mechanisms, denoted by a reference numeral 110, includes a tilt motor 111, a tilt screw 112, and a tilt nut 113. Revolutions of the tilt screw 112 permit the tilt nut 111 to move vertically up and down. The tilt nut 113 is coupled to the laser projector 103 with the tilt arm 116 intervening therebetween. Vertical upward and downward movement of the tilt nut 113 causes the laser projector 103 to tilt. The other of the pairs of the inclination mechanisms not shown uses the same components and configuration as in the inclination mechanism 110 to tilt the laser projector 103 in a direction perpendicular to a direction in which the inclination mechanism 110 inclines.

A fixed inclination sensor 118 in parallel with the tilt arm 116 and a fixed inclination sensor 119 orthogonal to the tilt arm 116 are provided in the middle of the laser projector 103. The inclination mechanism 110 causes the tilt arm 116 to incline for an adjustment of continuously retaining the fixed inclination sensor 118 at its horizontal posture. At the same time, the other pair of the inclination mechanism functions to adjust the fixed inclination sensor 119 so as to continually retain it at a horizontal posture.

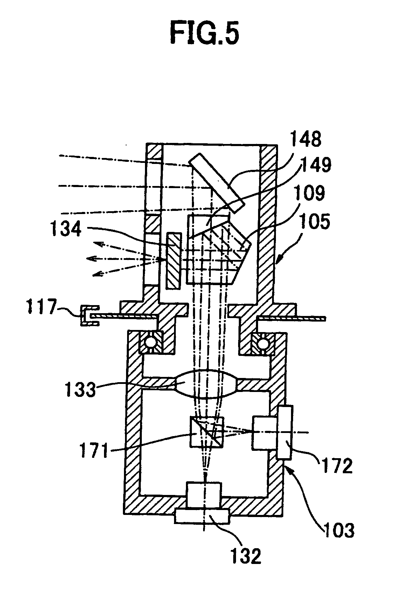

Next, the laser projector 103 will now be described. As illustrated in Fig. 5, a diverging laser beam projector 132, and die clock prism 171, diverging beam projection optics including a collimator lens 133 collimating laser light from the laser beam projector 132, and the rotary unit 105 rotatably supported relative to the beam projection optics.

The rotary unit 105 is comprised of the pentaprism 109 deflecting the laser light from the beam projection optics by 90°, and a diffraction grating (BOE) 134 that functions to shape the deflected light from the pentaprism 109 into the three diverging beams b1, b2, and b3.

The laser projector 103 further includes an angular signal developing laser beam projector 172 that develops an angular signal carrying information on a rotation angle, or that emits laser beam S transmitting the information on a rotation angle to the light sensor 154, a die clock prism 149 incorporated in the pentaprism 109, and a mirror 148 that deflects the laser beam S transmitted through the die clock prism 149. However, light used to transmit the information on a rotation angle is not limited to laser beam, but instead, LED or laser diode may be replaced with the laser beam projector 172.

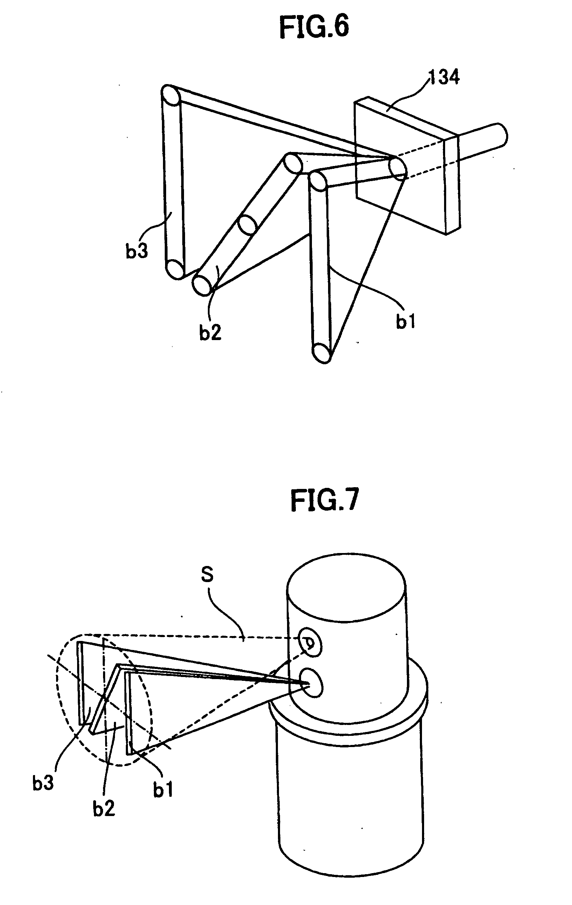

The laser light emitted from the diverging laser beam projector 132 is transmitted through the die clock prism 171, directed at the collimator lens 133 to be collimated, and thereafter deflected by 90° by the pentaprism 109. As illustrated in Fig. 6, the laser light 90° deflected by the pentaprism 109, after being split into the three diverging beams b1, b2, and b3 by the diffraction grating 134, exits from the laser projector 103. On the other hand, the laser beam S emitted from the angular signal developing laser beam projector 172 is reflected by the die clock prism 171 to become incident upon the collimator lens 133. The projector 172 is fixed in a position deviated from a focal point at the collimator lens 13, and hence, the laser beam S from the projector 172, after exiting from the collimator lens 133, is diverged instead of being collimated. The laser beam S transmitted through the collimator lens 133 is further passed through the pentaprism 109 and the die clock prism 149 and then reflected by the mirror 148, and eventually it exits the projector 103.

As shown in Fig. 7, the laser projector 103 emits the laser beam S carrying an angular signal, and the diverging beams b1, b2, and b3, all in the same direction. The diverging laser beam projector 132 and the angular signal developing laser beam projector 172 are configured to emit laser beams of varied wavelengths so that the light sensor 154 having received the laser beam S and the diverging beams b1, b2, and b3 can distinguish one from the other. The laser beam S carrying an angular signal diverges so as to cover the entire range throughout which positional measurements can be carried out by utilizing the diverging beams b1, b2, and b3. The laser beam S is variously modulated (so as to cause light to come up and out in varied cycles), so that the laser beam S derived from the rotary laser device 151 can be distinguished from the laser beam S emitted from the rotary laser device 152. Alternatively, the laser beam S may be varied in wavelength from one rotary laser device to another from which it is emitted.

(1. 1. 2) Light Sensor

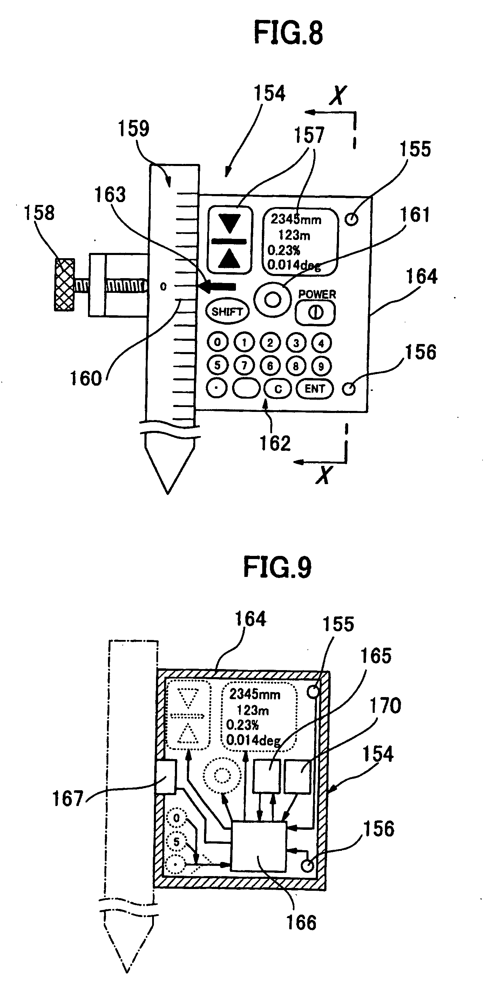

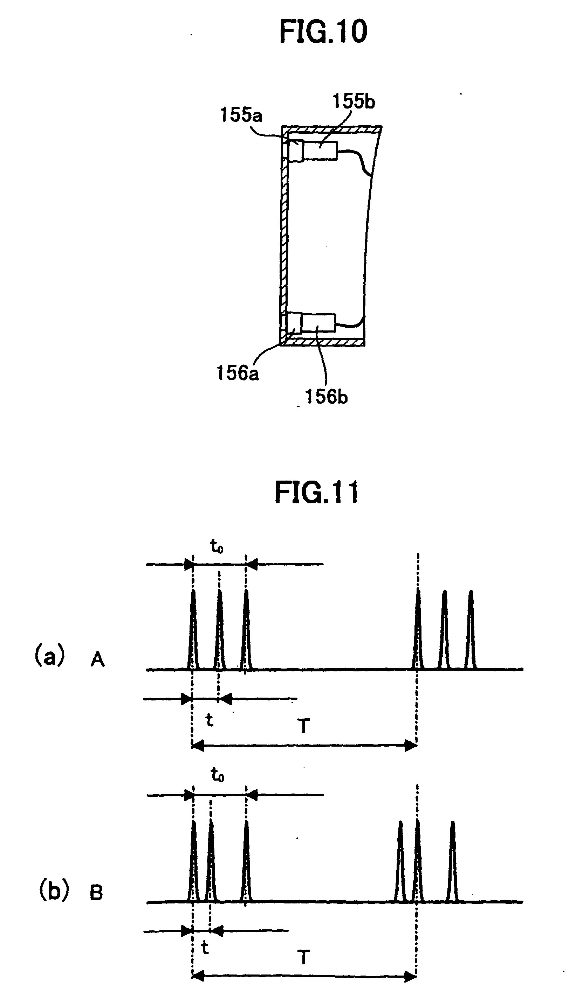

The light sensor 154 receiving the diverging beams b1, b2, and b3 emitted from the rotary laser devices 151 and 152 will now be described. Fig. 8 is a front view illustrating the light sensor, Fig. 9 is a sectional view thereof, and Fig. 10 is a sectional view along the line X-X in Fig. 8. Various components such as a light receiving unit 156 detecting the diverging beams b1, b2, and b3, and a light receiving unit 155 receiving the laser beam S carrying rotation angle data of each of the rotary laser devices 151 and 152 are built in a box-shaped board 164 in the light sensor 154. The box-shaped board 164 further has a display 157, an alarm 161 such as a buzzer, entry keys 162, an index 163, a rod 159 having a scale 160, and a fixed knob 158. Additionally, the box-shaped board 164 is incorporated with a memory 165, an operational unit 166, a scale reader 167, and an angular signal receiver 170.

The light receiving unit 156 is provided with a physical or electrical filter 156a opaque to the laser beam S carrying an angular signal, and a light receiving element 156b detecting light transmitted through the filter 156a. Similarly, the light receiving unit 155 is provided with a physical or electrical filter 155a transmitting only the laser beam S, and a light receiving element 155b detecting light transmitted through the filter 155a.

(1. 2) Theory of Measuring Positions

(1. 2. 1) Principle of Measuring Elevation- and Depression- Angles

First explained below will be a principle of measuring an elevation- or depression-angle, namely, an angle at which a straight line passing a center C of revolving movement of the diverging beams and also passing the light receiving unit 156 of the light sensor 154 meets a horizontal plane.

As stated above, the rotary laser device 151 emits the diverging beams b1, b2, and b3 which rotate about the center C. As shown in Fig. 3, the diverging beam b2 is emitted, meeting the horizontal plane at an angle θ. A cross line of the diverging beam 1 with the horizontal plane meets a cross line of the diverging beam b3 with the horizontal plane at an angle 2δ. The three diverging beams b1, b2, and b3 revolves under such conditions, and hence, those diverging beams sequentially pass the light receiving unit 156 in the light sensor 154 at varying points of time in the order of b3, b2, and then b1.

When the light receiving unit 156 in the light receiving device 154 is in a position A within the horizontal plane, light detected by the light sensor 154 can be depicted as in Fig. 11(a). Otherwise, when the light receiving unit 156 is in a position translated vertically upward from the position A, the diverging beams resultantly detected can be detected as in Fig. 11(b). As illustrated in Fig. 11(a), two of the diverging beams b1 and b3 are sequentially detected with a time delay of $t_0$ after one of them that has first come is detected. The diverging beam b2 is detected with a time delay of $t$ after the diverging beam b3 is detected. When the light receiving unit 156 is in the position A within the horizontal plane, the time delay t is a half of the time delay to in duration. Thus, a relation can be expressed as in the following equation (1):

$$t_0 = 2t \qquad (1)$$

When the light receiving unit 156 is in the position B above the horizontal plane, the time delay $t$ from one detection to another is shorter than a half of $t_0$ as can be recognized in Fig. 11(b). As the light receiving unit 156 is located farther above the horizontal plane, the time delay $t$ between the detections becomes shorter, and the following equation (2) can be applied along with the time delay to obtain an angle $\angle$ BCA= $\gamma$ that is an angle at which a straight line passing the position B of the light receiving unit 156 and the diverging laser beam emitting point C meets the horizontal plane:

$$\gamma = \delta \left( 1 - \frac{2t}{t_0} \right) \tan \theta \qquad (2)$$

When the light receiving unit 156 is located below the horizontal plane the time delay t is longer than the time delay to in duration. Thus, it can be determined if the light receiving unit 156 is positioned above or below the horizontal plane. The equation (2) can be applied to a case where the light receiving unit 156 is located below the horizontal plane.
Alternatively, according to another principle of measurement as described later, after angular positions at instances when the diverging laser beams are respectively received to calculate angles corresponding to the time delays $t$ and $t_0$ between detections, the resultant angles may be substituted for $t$ and $t_0$ in the equation (2) to obtain $\gamma$.
Measurement of the elevation- or depression-angle $\gamma$ may similarly be carried out when the light sensor 154 receives the diverging laser beams b1, b2, and b3 emitted from the rotary laser device 152. The elevation- or depression-angle $\gamma$ obtained in relation with the diverging laser beam from the rotary laser device 151 and that obtained in relation with the beam from the rotary laser device 152 are averaged to improve a precision in measuring the elevation- or depression-angle. Alternatively, the present invention may be of a modified design in which only one of the rotary laser devices can emit the diverging laser beams.

(1. 2. 2) Principle of Measuring Rotational Angular Positions

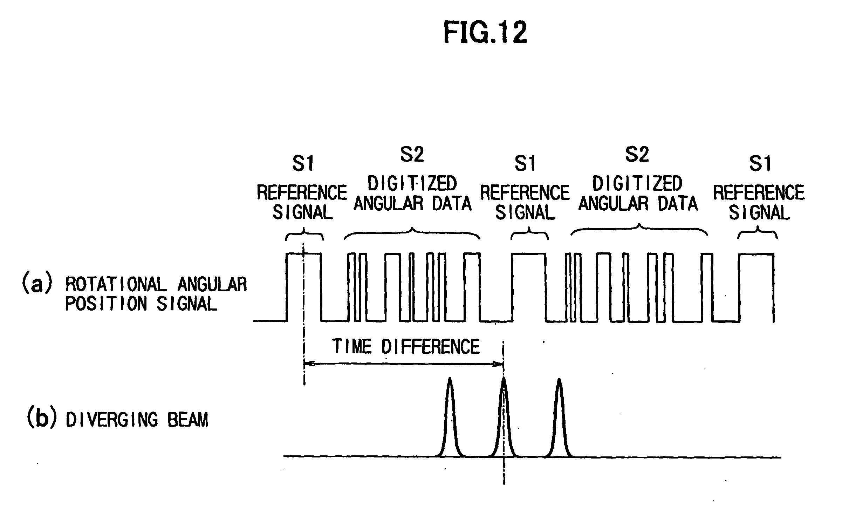

Then, now will be described a principle of measuring rotational angular positions or angular positions within the horizontal plane in which the light sensor 154 is located relative to the rotary laser device 151.
An encoder 117 of the rotary laser device 151 continuously performs real-time detection of rotation angles at which the rotary laser device 151 emits the diverging beams b1, b2, and b3, respectively. Data on the detected rotation angles are converted into optical signals in a manner as mentioned below and then signaled from the laser beam projector, being carried by the laser beam S. The signaled laser beam S passes the optics in the projector 103 and exits from the rotary laser device along with the diverging beams. The light receiving units 155 and 156 in the light sensor 154 respectively receive the diverging beams b1, b2, and b3 and the laser beam S. At an instance when the light receiving nit 156 receives the diverging beam b2, a rotation angular position of the light sensor 154 can be determined from the data on the rotation angles carried by the laser beam S that is received at the light receiving unit 155.
Then, a method of converting the rotational angular data into an optical signal will be described. The angular signal developing laser beam projector 172 emits laser beam S varied in color (wavelength) from the diverging beams b1, b2, and b3, respectively. The laser beam S, coming up and out in a pattern as illustrated in Fig. 12(a), transmits data on a rotation angle or a rotational angular position. A signal depicted in Fig. 12(a) is composed of a reference signal S1 and a digitized signal S2 which is produced by digitizing the rotational angular position in a pattern of beam coming up and out. The reference signal S1 is emitted at constant intervals while the digitized signal S2 comes up and out between any two of the reference signals, in a pattern to represent a digitized code. The digitized code is a rotation angular position detected by the encoder 17 (Fig. 5) and then digitized.
The light sensor 154, when receiving a signal representing the rotational angular position, analyzes the digitized signal to obtain the rotational angular position. However, since the digitized signal S2 is intermittently transmitted at some intervals, the rotational angular position represents a merely approximate value. Hence, as shown in Fig. 12 (b), information on the rotational angular position is intermittently interpolated between a point of time when the diverging beam b2 is received and a point of time when the reference signal S1 is received is utilized to determine in order to determine an angle more accurately.

(1. 2. 3) Principle of Determining Three-Dimensional Positions

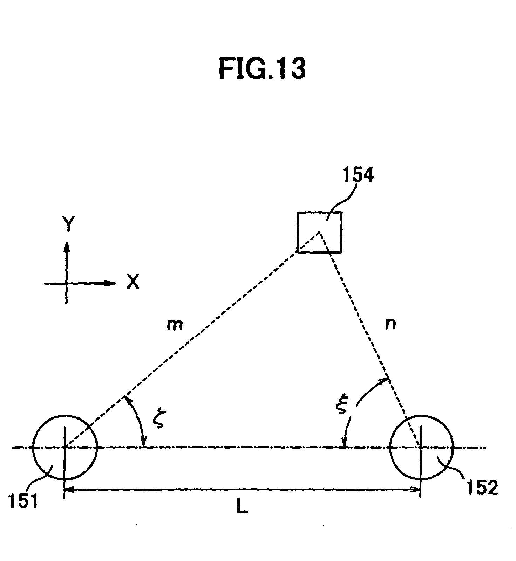

A principle of Determining a three-dimensional position where the light sensor 154 lies will now be described. As shown in Fig. 13, both the rotary laser devices 151 and 152 are disposed at a known interval L therebetween. The above mentioned determination principle can apply to determine rotational angular positions $\zeta$ and $\xi$ of the light sensor 154 relative to the rotary laser devices 151, 152. Assuming that m denotes a distance between the rotary laser device 151 and the light sensor 154 while n denotes a distance between the rotary laser device 152 and the light sensor 154, a relation will be established among the rotational angular positions $\zeta$ and $\xi$, and the distances L, m, and n as in the following equations (3):

$$\frac{L}{\sin(180\text{-}\zeta\text{-}\xi)} = \frac{m}{\sin\zeta} = \frac{n}{\sin\xi} \tag{3}$$

Thus, the distances m and n can be obtained based upon the following equation (4):

$$m = \frac{L \sin \varsigma}{\sin(180 - \varsigma - \xi)}$$
$$n = \frac{L \sin \xi}{\sin(180 - \varsigma - \xi)} \tag{4}$$

Assuming now that the original point is the point C of the rotation center of the rotary laser device 151, the X-axis lies along an extension of the distance L, and the Y-axis lies along an extension perpendicular to the X-axis in a horizontal plane, X-coordinate x and Y-coordinate y in relation with the light sensor 154 can be obtained based upon an equation (5) as follows:

$$x = m \cos\varsigma$$
$$y = m \sin \varsigma \tag{5}$$

Z-coordinate z or a height z vertical to the horizontal plane can be obtained by applying the following equation (6) together with an elevation- or depression-angle $\gamma$ calculated by the equation (2):

$$z = m \tan \gamma \tag{6}$$

When the original point is replaced with some other point, or when the X- and/or Y-axis is settled in some other direction, the coordinates can be transformed in any known proper method to obtain a required three-dimensional position.

(1. 3) Operation of Position Determining System

A first embodiment of the position determining system according to the present invention can be used for operations of measuring a position of the light sensor 154 relative to the rotary laser devices 151 and 152 and creating a plane or curved plane predetermined and input in the light sensor 154.

(1. 3. 1) Setting of Plane by Position Determining System

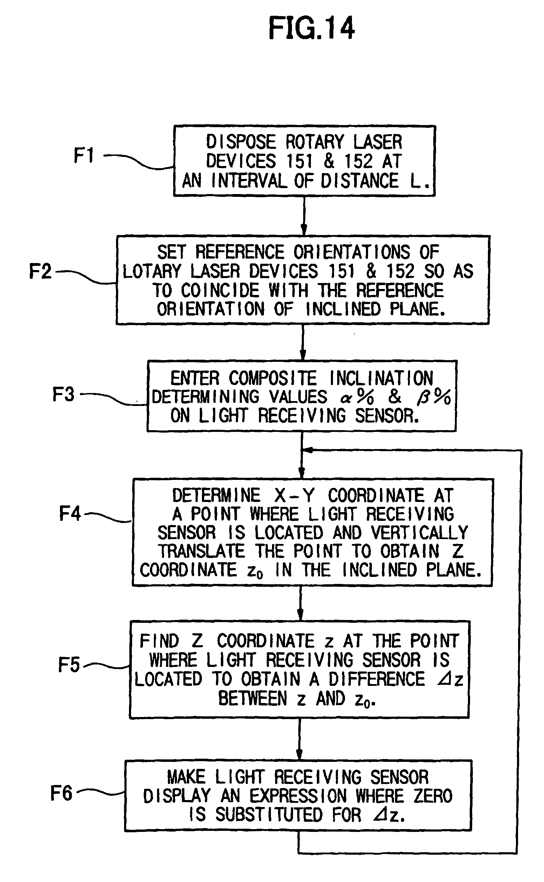

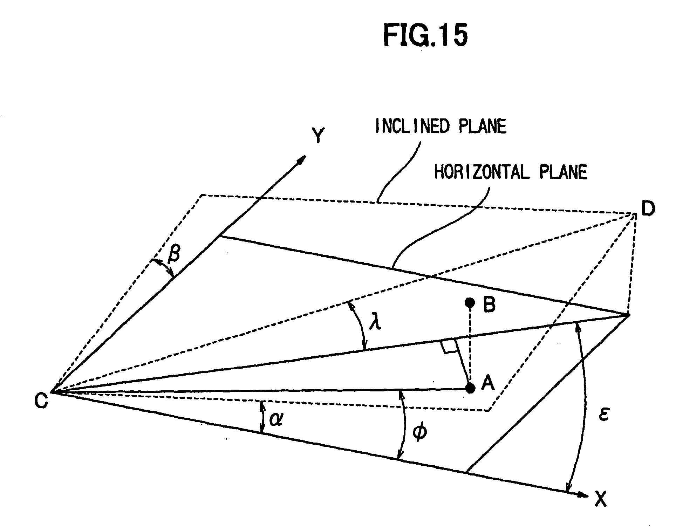

Fig. 14 is a flow chart illustrating a stepwise operation procedure of creating a phantom plane such as an inclined plane by means of the position determining system. Fig. 15 is a diagram showing a positional relation among the horizontal plane, the desired inclined plane, and the coordinate axes. In this embodiment, a case will be explained where an inclined plane (dual-axis inclination plane) is created, crossing the reference point or the point C, meeting the X-axis at an angle $\alpha$, and meeting the Y-axis at an angle $\beta$. The inclined plane is, when measured in relation with any point along a section CD, maximized in inclination (tilt), and an inclination angle is designated as $\lambda$.

At Step F1, first the rotary laser device 151 is positioned so that the diverging beams b1, b2, and b3 rotate about a vertical axis passing the point C. Then, the rotary laser device 152 is placed on the X-axis the distance L away from the point C. Preferably, a tolerance of the distance L is less than 1 mm. A direction of the X-axis is arbitrarily determined so as to coincide with a reference orientation of a desired plane which is to be created.

Then, at Step F2, the rotary laser devices 151 and 152 are located so that their respective reference orientations coincide with a reference orientation of the desired inclined plane (i.e., the direction of the X-axis in this case). The reference orientations of the rotary laser devices 151 and 152 are directions in which the encoder 117 built in each of the rotary laser devices emits diverging beam at an angle of zero degree. Such positioning can be carried out by means of any well-known appropriate apparatus including a collimating telescope. In this embodiment, the encoder 117 attached to the rotary laser device 151, while emitting the diverging laser beam b2 toward the rotary laser device 152, produces the power of zero and measures an angle with a norm where a counterclockwise direction is a positive direction; meanwhile the encoder 117 attached to the rotary laser device 152, while emitting the diverging laser beam b2 toward the rotary laser device 151, produces the power of zero and measures an angle with a norm where a clockwise direction is a positive direction.

At Step F3, entered on entry keys 162 of the light sensor 154 are the desired inclination angle $\alpha$ at the reference orientation of the desired inclined plane (i.e., in the direction of the X-axis) and the desired inclination angle $\beta$ orthogonal to the reference orientation (i.e., in the direction of the Y-axis). Values entered are stored in a memory 165 in the light sensor 154. The light sensor 154 may be configured so that the inclination angles $\alpha$ and $\beta$ can be entered in optional units such as radians (rad), degrees (deg), gradient (%), and the like. The reference point C and the input values of two of the inclination $\alpha$ and $\beta$ are sufficient to totally define the inclined plane that is to be created. In general, the inclination angle of the inclined plane varies depending upon which direction from the reference point C a measurement on the inclination angle is performed. When the inclination angle is measured in an arbitrary direction (e.g., in a direction defined by the X-axis and an angle $\phi$), an inclination angle $\gamma_0$ (elevation-angle or depression angle) can be obtained from an equation (7) as follows:

$$\gamma_0 = \tan^{-1}(\tan\lambda\,\cos(\phi - \varepsilon)) \tag{7}$$

where

$$A = \sqrt{\alpha^2 + \beta^2}$$

is satisfied, and

when $\alpha > 0$ and $\beta \geq 0$, $\varepsilon = \tan^{-1}(\beta/\alpha)$;
when $\alpha = 0$ and $\beta > 0$, $\varepsilon = \pi/2$;
when $\alpha < 0$ and $\beta \geq 0$, $\varepsilon = \tan^{-1}(\beta/\alpha) + \pi$;
when $\alpha < 0$ and $\beta \leq 0$, $\varepsilon = -\tan^{-1}(\beta/\alpha) - \pi$ ;
when $\alpha = 0$ and $\beta < 0$, $\varepsilon = -\pi/2$; and
when $\alpha > 0$ and $\beta \leq 0$, $\varepsilon = \tan^{-1}(\beta/\alpha)$.

The distance L between the rotary laser devices 151 and 152 that have been determined in advance is also entered on the entry keys 162 and stored in the memory 165.

At Step F4, the light receiving unit 155 of the light sensor 154 receives the laser beam S emitted from the rotary laser device 151. The operational unit 166 in the light sensor 154 uses an optical signal carried in the received laser beam to arithmetically compute the rotational angular position $\zeta$ where the light sensor 154 is currently located relative to the reference point C. Furthermore, the operational unit 166 performs the similar arithmetic operation with the laser beam S emitted from the rotary laser device 152 to obtain the rotational angular position $\xi$. Two of the rotary laser devices 151 and 152 are synchronized with each other to permit the laser beams S from them to rotate at the identical revolving rate with each other and to permit the laser beams S from them to be in parallel with each other. Consequently, the laser beams S emitted respectively from the rotary laser devices 151 and 152 would not simultaneously fall on the light sensor 154. As mentioned above, since the rotary laser devices 151 and 152 emit the laser beams S of modulations varied from each other, the light sensor 154 can easily distinguish two of the laser beams S one from another.

The operational unit 166 uses the resultantly obtained rotational angular positions $\zeta$ and $\xi$, and the distance L between two of the rotary laser devices and applies the equation (4) to arithmetically obtain the distance m between the rotary laser device 151 and the light sensor 154 and the distance n between the rotary laser device 152 and the light sensor 154. After that, the operational unit 166 uses the equation (5) to obtain the X- and Y- coordinates of the light sensor 154 with the origin of the point C.

The operational unit 166 of the light sensor 154 arithmetically computes the inclination angle $\gamma_0$ of the inclined plane that is measured in a direction coincident with the measured rotational angular position. When the light sensor 154 is located in a point A which lies in a rotational angular position defined along an extension from the reference point C at the $\phi$ (i.e., the point A lies in the horizontal plane), the inclination angle $\gamma_0$ of the inclined plane, which is measured in the direction defined by the angle $\phi$, is equal to an angle $\angle BCA$ at which a straight line crossing both a point B in the inclined plane vertically above the point A and the point C meets the horizontal plane, and the inclination angle $\gamma_0$ can be arithmetically computed from the equation (3). The operational unit 166 uses the inclination angle $\gamma_0$ and the distance m and further applies the equation (6) to obtain a distance between the point A and point B, namely, Z-coordinate $z_0$.

At Step F5, the operational unit 166 in the light sensor 154 uses the delays t and to between detections of two of those three diverging beams b1, b2, and b3 emitted from the rotary laser device 151 and further applies the equation (2) to arithmetically compute the elevation-angle or depression-angle $\gamma$ in the position where the light sensor 154 currently lies and indicate the resultant value in the display 157. Moreover, the Z-coordinate z of the light sensor 154 is computed based upon the equation (6) with the elevation-angle or depression angle y and the distance m to display the resultant value in the display 157. The rotational angular position $\zeta$ of the light sensor 154 is also indicated in the display 157. Then, the elevation-angle or the depression angle denoted by z and the inclination angle denoted by $z_0$ are compared with each other to obtain a difference $\Delta z$ between them.

At Step F6, from $\Delta z$ obtained at Step F5, the light sensor 154 determines which way, upward or downward, the light sensor 154 must be shifted to permit it to come close to the desired inclined plane, and the determination result is indicated in the display 157. An operator displaces the light sensor 154 upward or downward depending upon the indication in the display 157. A displacement of the light sensor 154 can be read on the index 163 and the scale rod 159 provided in the light sensor. The displacement may instead be read by the scale reader 167 and a value read out may be sent to the operational unit 166.

The stepwise procedure from Step F4 to Step F6 are automatically repeated till the light sensor 154 is placed in the desired inclined plane that is to be created. Preferably, when located in the desired inclined plane, the light sensor 154 allows it buzzer 161 to buzz.

As desired, it may also be preferable that the inclined plane is automatically determined with a straight line crossing the reference point C and the light sensor 154 lying in an arbitrary location being inclined at the maximized gradient. Specifically, as in Fig. 15, the rotary laser device 151 is located in the reference point C while the rotary laser device 152 is positioned the distance L away from the rotary laser device 151. Then, the light sensor 154 is placed in an arbitrary point D. After that, the rotary laser device 151 and 152 are actuated to determine X-Y-Z coordinate at the point D. The operational unit 166 in the light sensor 154 computes the inclination angle $\alpha$ in a direction (i.e., the X-axis direction) along which both the rotary laser devices 151 and 152 lie in straight line that defines an inclined plane with the maximized inclination angle defined by a section CD and also computes the inclination angle $\beta$ in a direction of the Y-axis orthogonal to the X-axis. The resultant inclination angles $\alpha$ and $\beta$ are indicated in the display 157 of the light sensor 154, and thus, the inclination plane defined by the inclination angles $\alpha$ and $\beta$ is determined. In this way, the inclined plane thus determined can be produced in an arbitrary location. Alternatively, it may also be preferable that the buzzer buzzes when the light sensor 154 is placed in the inclined plane.

Further alternatively, three arbitrary points may be specified as desired so that an inclined plane can be determined crossing all the three points at a time in conjunction with the light sensor 154.

Although one embodiment has been described in the context of determination of an inclined plane, the position determining system according to the present invention may be adapted to determine a surface of any shape such as a curved surface. In such a case, the light sensor may be configured so as to key-enter Z-coordinate thereon in relation with X-Y coordinate of the surface that is to be created. A difference is arithmetically computed between a height of the desired surface and a height at which the light sensor lies so as to give an indication to guide the operator to set the light sensor in the desired surface that is to be created, similar to the above-mentioned embodiment.

(1. 3. 2) Position Measurement by Position Determining System

The above-mentioned operation employs a manner in which the operator predetermines an inclined plane as desired and then uses the position determining system of the present invention to produce the inclined plane. On the contrary, an alternative operation described hereinafter employs a manner in which the position determining system of the present invention is used to determine coordinates at an arbitrary point at which the light sensor 154 is located. Thus, the rotary laser device 151 is located in the reference point C, the rotary laser device 152 is positioned a distance L away from the rotary laser device 151, and the light sensor 154 is placed in a point of which coordinate is to be found. After that, the rotary laser device 151 and 152 are actuated to emit the diverging laser beams b1, b2, and b3. Based upon the diverging beams incident upon the light sensor 154, the light sensor 154 determines three-dimensional coordinate at a point where it lies to display the coordinate thereon. Procedures such as computation of the three-dimensional coordinate of the position where the light sensor 154 lies are totally the same as those in the aforementioned case of position determination. Although the aforementioned embodiment defines the origin of the three-dimensional coordinate as the rotation center of the rotary laser device 151 or the point C, it may also be preferable that any point can be the origin to find the coordinate at the position where the light sensor 154 is. For example, at the beginning of the measurement, the light sensor 154 is located in a desired position to determine the three-dimensional coordinate thereof. At succeeding measurement, the light sensor 154 may be configured to indicated the coordinate with the position where the light sensor 154 has first been positioned being defined as the origin.

In the above-mentioned embodiment, a plurality of the light sensors 154 can be combined with each of the rotary laser devices 151 and 152 so as to independently use each of the light sensors 154. Moreover, when the prior art embodiment is used, two of the inclined plane determining systems are required to produce two inclined plane varied from each other, and laser beams emitted from the rotary laser devices in each system interfere with each other to cause a problem of malfunctions. On the other hand, in the embodiments of the position determining system according to the present invention, simultaneously a plurality of light sensors 154 can be used in relation with a single pair of the rotary laser devices 151 and 152, and additionally, varied inclined planes can be produced from one light sensor 154 to the other and/or varied three-dimensional coordinates can be measured from one light sensor 154 to the other.

In this way, for instance, when the light sensor 154 is attached to construction equipment for the purpose of land grading, a plurality of construction machines can be simultaneously in use in relation with a single pair of the rotary laser devices 151 and 152, and lands of varied inclination planes can accordingly be leveled by varied construction machines. When the desired inclined plane is varied from one to another, settings on the inclined plane can be changed for each of the light sensor, and hence, the rotary laser devices in relation with the sensor do not have to be interrupted, which, on the other hand, eliminates a necessity of interrupting the activated light sensors on which there is no need of change in settings.

(1. 3. 3) Alternative Operation Manner of Position Determining System

An alternative operation manner of the position determining system will now be described. Hereinafter, an available substitutional procedure will be given as to the Step F2 in Fig. 14, namely, a procedure of conforming the reference orientations of the rotary laser devices 151 and 152 to the reference orientation of the inclined plane.

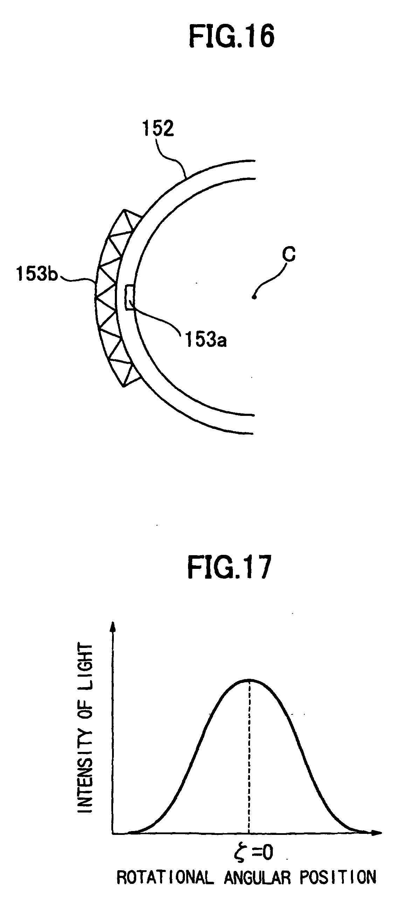

As shown in Fig. 16, a light receiving means 153a and a reflecting means 153b are incorporated in each of the rotary laser devices 151 and 152. The diverging laser beam emitted from the rotary laser device 151 is reflected by the reflecting means 153b in the rotary laser device 152, and the encoder 117 measures a rotational angular position of the rotary laser device 151 at an instant when the reflected beam from the reflecting means falls on the light receiving means 153a in the rotary laser device 151. Converting data on the rotational angular position thus obtained so that the rotation angular position satisfies $\zeta=0$, the rotational angular position can be obtained under a condition where the reference orientation of the inclined plane is zero. A similar procedure is performed as with the rotary laser device 152, and resultantly, a desired rotation angular position can be found under a condition where the reference orientation is zero.

Preferably, the reflecting means 153b incorporated in each of the rotary laser devices is configured as in a module of Fig. 16 where tape that is comprised of micro prisms shaped in corner cubes are deployed in line is attached along a circumference concentric with the rotary laser device. The diverging laser beam demitted from the rotary laser device 151 is reflected by the reflecting means 153b attached to the rotary laser device 152, and the reflected beam is received by the light receiving means 153a incorporated in the rotary laser device 151. At this time, intensity of the light incident upon the light receiving means 153a varies depending upon the rotational angular position at which the diverging beam is emitted, as can be seen in Fig. 17. The rotary laser device 152 is regarded as being disposed in a rotational angular position where the intensity of the light incident upon the light receiving means 153a in the rotary laser device 151 is maximized. The rotary laser device 151 is adapted to produce a signal carrying the rotational angular

position satisfying $\zeta=0$ at which the intensity of the light incident upon the light receiving means 153a is maximized. Alternatively, a light emitting means (not shown) may be otherwise incorporated in the rotary laser device 151, and when the intensity of the light incident upon the light receiving means 153a reaches the maximized level, the light emitting means (not shown) emits beam. The beam emitted from the light emitting means is received at the light sensor, and the light sensor detects the rotational angular position satisfying $\zeta=0$. A similar procedure is performed as with the rotary laser device 152 to determine the rotational angular position meeting $\xi=0$.

In another embodiment of the Step F2, the rotary laser devices 151 and 152 are arbitrarily oriented at an interval of the distance L between them. Then, the light sensor 154 is located in the same position as the rotary laser device 152, and the light sensor 154 receives the laser beam S from the rotary laser device 151. The rotational angular position determined by the light sensing operation can be utilized as an offset angle and subtracted from the measured rotation angular position to find the rotational angular position at which a direction of a reference line joining the rotary laser devices 151 and 152 is defined by $\zeta=0$. Similarly, the light sensor 154 is placed in the position where the rotary laser device 151 lies to receive the laser beam S from the rotary laser device 152, and thus, an offset angle is determined. The offset angle is subtracted from the determined rotational angular position to find the rotational angular position at which the direction of the reference line is defined by $\xi=0$.

In another embodiment, each of the rotary laser devices 151 and 152 is provided with a light receiving means and a light emitting means (not shown). When the light receiving means in the rotary laser device 152 receives the diverging laser beam emitted from the rotary laser device 151, the light emitting means (not shown) in the rotary laser device 152 emits light from the entire circumference thereof. The light sensor 154 stores data on the rotational angular position transmitted from the rotary laser device 151 at an instant of the beam reception. Then, the light sensor 154 stores data on the rotational angular position transmitted from the rotary laser device 151 at an instant of the reception of the diverging laser beam from the rotary laser device 151. Subtracting the data on the rotational angular signal upon the reception of light from the light emitting means (not shown) in the rotary laser device 152 from the data on the rotational angular position upon the reception of the diverging laser beam, the rotational angular position at which the direction of the reference line is defined by $\zeta=0$ can be obtained. Similarly, functionally replacing the rotary laser device 151 with the device 152 and vice versa, the rotational angular position at which the direction of the reference line is defined by $\xi=0$ can be obtained.

(2) Other Embodiments

Although the first preferred embodiment of the position determining system according to the present invention has been described, the rotary laser devices and the light sensor incorporated in the position determining system can be implemented as explained hereinafter. Corresponding components to those of the first embodiment are denoted by similar reference numerals in which only two orders of digits are changed, and details of the similar components to those of the first embodiment are omitted.

(2. 1) Alternative Embodiments of Rotary Laser Device

(2. 1. 1) Rotary Laser Device with Diffraction Grating Being Positioned at a Lower Part of Pentaprism

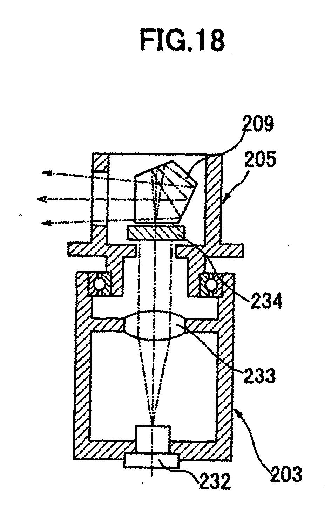

As illustrated in Fig. 18, a diffraction grating 234 of a laser projector 203 incorporated in the rotary laser device may be positioned in a lower part of a pentaprism 209. For simplification of the depictions in the drawing, optics emitting the laser beam S carrying the rotational angular position is omitted from Fig. 18.

(2. 1. 2) Rotary Laser Device Emitting Diverging Laser Beams of Varied Polarizations from One Another

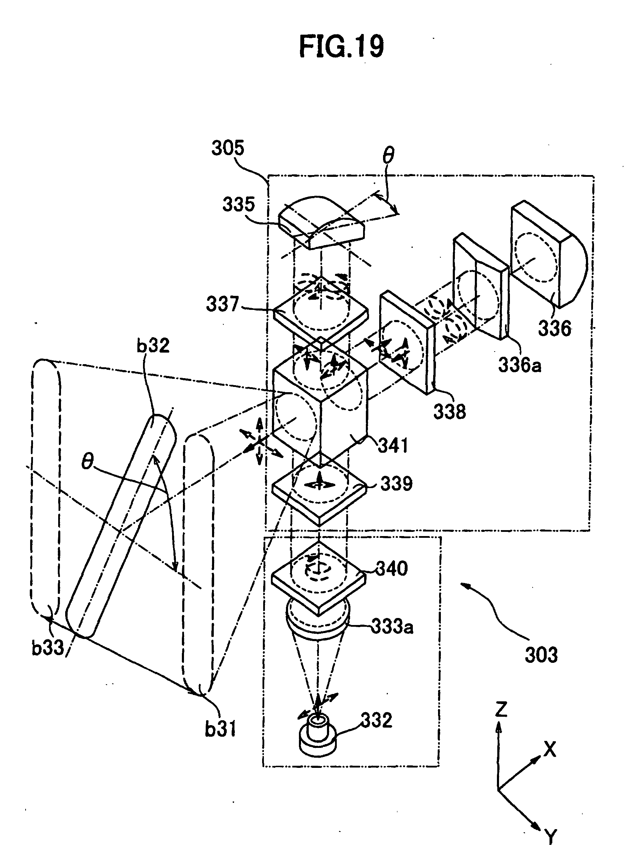

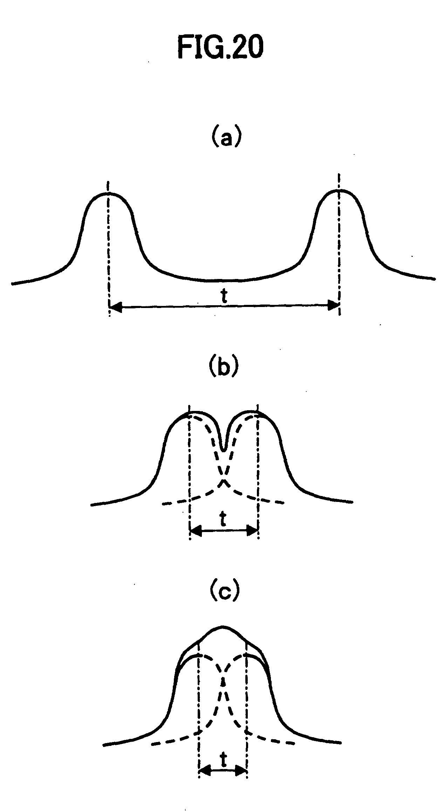

With reference to Fig. 19, the laser projector that emits the diverging laser beams of varied polarizations from one another will now be described. This embodiment of the position determining system according to the present invention is adapted to find an elevation-angle or depression-angle $\gamma$ by applying the equation (2) in relation with the time delay $t$ between receptions of the diverging laser beams incident upon the light sensor. As can be seen in Fig. 20 (a), when the time delay between receptions of the diverging laser beams incident upon the light sensor is relatively long, it is possible to obtain the time delay $t$ accurately. However, as in Figs. 20 (b) and 20(c), as the time delay $t$ becomes shorter, it is hard to distinguish two of the incident diverging laser beams from one another, and accordingly, it becomes difficult to determine the time delay $t$ between receptions of those two diverging laser beams. Thus, the diverging laser beams are deflected in different ways from one another so that the diverging laser beams can be easily distinguished from one another.

Fig. 19 depicts optics of a laser projector 303 that emits three diverging laser beams b31, b32, and b33 of varied polarizations from one another. Typically, directions of the laser beams passing optical components in the drawing are denoted by solid arrows while deflection directions of the laser beams are denoted by broken arrows.

When laser diode is used for laser beam projector 332 incorporated in the laser projector 303, resultant laser beam assumes linear polarization. Hereinafter, it is assumed that the laser beam is deflected in an X-direction, the laser beam is emitted in a Z-direction, and a direction orthogonal to an X-Z plane is a Y-direction. The laser beam emitted from the laser beam projector 332 is collimated by a collimator lens 333 and falls upon a one-quarter (1/4) wave plate 340. The one-quarter wave plate 340 is oriented so that the laser beam emitted from the laser beam projector 332 and then linear polarized in the X-direction turns to circular polarization. The laser beam, after passing the one-quarter wave plate 340, is transmitted through another one-quarter wave plate 339 again, and then, it is linear polarized in a direction meeting an axis in the X-direction at an angle of 45 degrees, as shown in Fig. 19. Since a rotary unit 305 is rotatably supported, a relative position of the one-quarter wave plate 340 to the one-quarter wave plate 339 is varied. However, the laser beam after being passed through the one-quarter wave plate assumes circular polarization, and hence, a deflection direction of the linear polarization after passing the one-quarter wave plate 339 again is not affected by a variation in the relative position of the wave plate but is determined by the one-quarter wave plate 339. The laser beam passes the polarized beam splitter 341. The polarized beam splitter 341 reflects polarization components in the Y-direction while transmitting polarization components in the X-direction. Thus, the Y-direction components of the laser beam that are linearly polarized in a direction meeting an axis in the X-direction at an angle of 45 degrees by the one-quarter wave plate 339 are reflected by the polarized beam splitter 341 and deflected by 90 degrees. The X-direction components of the laser beam are passed through the polarized beam splitter 341.

The laser beam reflected by the polarized beam splitter 341 falls upon the one-quarter wave plate 338 again to turn to circular polarization, and then it is reflected by a cylinder mirror 336. The cylinder mirror 336 is oriented so that the laser beam, when emitted from the rotary unit 305, becomes orthogonal to a horizontal plane. A declination prism 336a is placed between the one-quarter wave plate 338 and the cylinder mirror 336. The declination prism 336a is bisected at its center, and it assumes a transmission declination by which the diverging beams b31 and b32, when emitted from the rotary unit 305, meet at an angle of $2\delta$. Since the laser beam reflected by the cylinder mirror 336 is transmitted through the declination prism 336a and the one-quarter wave plate 338 again and then linearly polarized in the Z-direction, the laser beam then can be transmitted through the polarized beam splitter 341 and then exits from the rotary unit 305.

On the other hand, the laser beam transmitted through the polarized beam splitter 341 falls upon the one-quarter wave plate 337 to turn to circular polarization, and thereafter, it is reflected by the cylinder mirror 335. The cylinder mirror 335 is oriented so that the diverging laser beam b32, when exiting from the rotary unit 305, meets the horizontal plane at an angle of θ. Since the laser beam reflected by the cylinder mirror 335 is transmitted through the one-quarter wave plate 337 again and then linearly polarized in the Y-direction, the laser beam then can be reflected by the polarized beam splitter 341 that has transmitted it in the earlier stage, and it exits from the rotary unit 305.

When the rotary laser device emitting the diverging beams of varied polarizations from one another is used, optics is added to the light sensor so as to separate the diverging beams of varied polarizations. Specifically, the light sensor 154 is provided with a beam splitter (not shown) that is used to split the laser beams of varied polarizations. A light receiving element (not shown) that receives the laser beam transmitted through the beam splitter (not shown), and a light receiving element (not shown) that receives the laser beam reflected by the beam splitter (not shown) are separately provided. In such a configuration, two diverging laser beams of varied polarizations from each other, even if falling upon the light receiving elements (not shown) one after another at short time intervals, are received at the separate light receiving elements, and hence, the time delay *t* between receptions of the beams can be accurately determined.

(2. 1. 3) Rotary Laser Device Emitting Diverging Laser beams and Laser beam Carrying Angular signal in Varied Directions from One Another

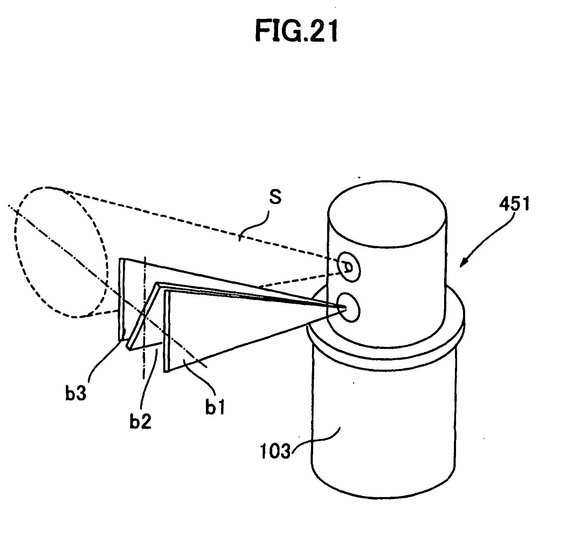

The three diverging beams and the laser beam S carrying an angular signal do not have to necessarily be emitted in the same direction. Specifically, as shown in Fig. 21, the rotary laser device 451 may be adapted to emit the diverging beams b1, b2, and b3 and the laser beams S carrying an angular signal in varied directions from one another so that those beams would not interfere with one another. In such a case, a time delay between the time when the diverging beam b2 is received and the time when the laser beam S is received is used to compute an angle. In this configuration, laser light developed from the diverging beams b1, b2, and b3 and that from the laser beam S carrying an angular signal may be identical in color (wavelength), and a single light receiving unit provided in the light sensor may be shared between use for the diverging beams and use in receiving an angular signal. Additionally, it is necessary that the laser beam carrying an angular signal have an angular divergence that can cover the entire range where position measurement can be carried out by utilizing the diverging beams b1, b2, and b3.

(2. 1. 4) Rotary Laser Device Emitting Two Diverging Laser Beams

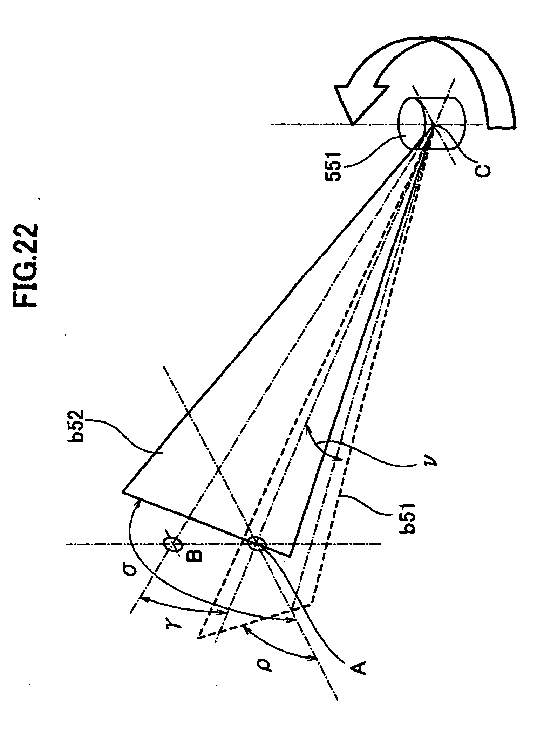

Referring to Fig. 22, a rotary laser device 551 emitting two diverging laser beams b51 and b52 will now be described. As shown in Fig. 22, the rotary laser device 551 rotates about the point C while emitting the diverging laser beams b51 and b52.

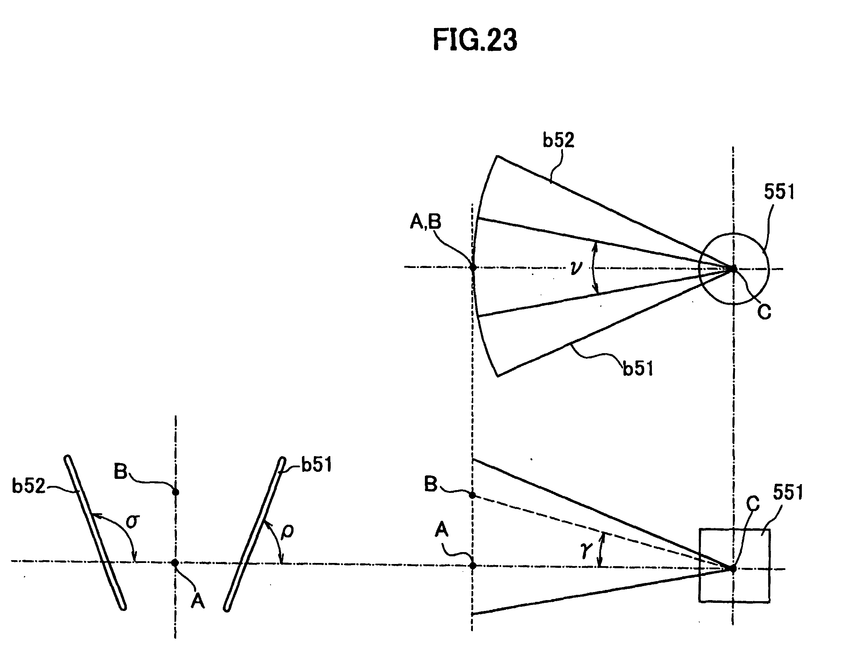

As shown in Fig. 23, the diverging laser beam b51 is emitted, meeting the horizontal plane at an angle p while the diverging laser beam b52 is emitted, meeting the horizontal plane at an angle $\sigma$. It is additionally assumed that a cross line of the diverging laser beam b51 with the horizontal plane meets a cross line of the diverging laser beam b52 with the horizontal plane at an angle $\nu$. Since two of the diverging laser beams b51 and b52 are rotated, keeping the above-stated conditions, respectively, the diverging laser beams b51 and b52 pass the light sensor one after another with some time difference. In this embodiment, the time difference is utilized to determine a height of the light sensor elevated or depressed from the horizontal plane.

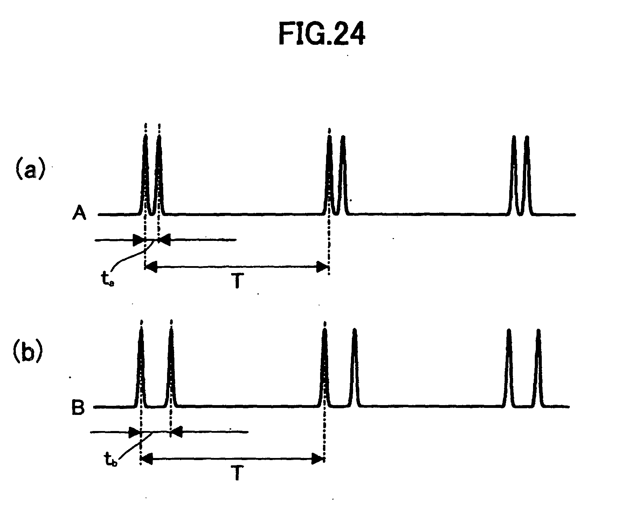

Referring now to Fig. 24, a principle of measuring an elevation-angle or depression-angle $\gamma$ in relation with this embodiment will be described. As mentioned above, the diverging laser beams b51 and b52 pass a light receiving unit in the light sensor 154 one after another with a time delay. When the light receiving unit of the light sensor 154 lies in a position A in the horizontal plane, the light sensor 154 detects laser beam as depicted in Fig. 24(a). When the light receiving unit lies in a position B vertically above the position A, detected diverging beam is as depicted in Fig. 24(b). As will be recognized in Fig. 24(a), assuming that the time delay between detections of two of the diverging beams is $t_a$ when the light receiving unit lies in the position A and that a revolving cycle of the rotary laser device 551 is T, the time delay between detections of two of the beams can be expressed as in the following equation (8):

$$t_a = T \frac{\delta}{2\pi} \tag{8}$$

A time delay $t_b$ between detections of the beams when the light receiving unit lies at an arbitrary level B is in proportion to an angle at which a straight line crossing both the position B of the light receiving unit and the emission point C of the diverging beam laser light and the horizontal plane, namely, an elevation-angle or depression-angle BCA=$\gamma$, and hence, the time delay $t_b$ between detections of the beams becomes longer as a value of $\gamma$ is greater. Thus, determining the time delay $t_b$ in relation with the position B, the following equations (9) and (10) can apply to find the angle $\gamma$ at which the straight line connecting the emission point C of the rotating laser and the position B of the light receiving unit meets the horizontal plane:

$$\gamma = \frac{t_b - t_a}{T \left( \dfrac{1}{2\pi \tan(\pi - \sigma)} + \dfrac{1}{2\pi \tan(\rho)} \right)} \tag{9}$$

$$\gamma = \frac{(t_b - t_a)\pi \tan(\rho)}{T} \text{ (especially, when } \pi - \sigma = \rho \text{ is satisfied)} \tag{10}$$

An arithmetic operation where the time delay $t_b$ between passages of two of the diverging laser beams b51 and b52 through the light receiving unit of the light sensor 154 and the rotation cycle T of the rotary laser device 551 are used to obtain the angle $\gamma$ is carried out by a light reception determining unit 166 built in the light sensor 154, and the angle $\gamma$ that can be obtained in such a way is indicated in the display 157. The resultant angle $\gamma$ is substituted for a term in the equation (6) to obtain Z-coordinate of the light sensor 154. Determinations of X-coordinate and Y-coordinate are the same as in the principle of measurement explained in the context of the first embodiment mentioned above. A desired elevation-angle or depression-angle $\gamma_0$ is entered in the light sensor in advance, and a time delay $t_b - t_a$ between receptions of the beams corresponding to the elevation-angle or depression-angle $\gamma_0$ is obtained. The light sensor is configured to indicate the receptions of light when the diverging laser beams fall on it one after another with the time delay $t_b - t_a$, and this permits formation of a conical reference surface. If the light sensor is adapted to indicate the receptions of the beams with the time delay $t_a$, it is also possible to produce a horizontal surface.

Since the equations (8) to (10) contain the term of the rotation cycle T of the rotary laser device, any unevenness in the rotations of the diverging laser beams may affect a measurement accuracy for the elevation-angle or depression-angle $\gamma$. Normally, in these embodiments, a motor of high rotation accuracy is used to rotate the diverging laser beams, but since the equation (2) does not contain the term of the rotation cycle T, the measurement accuracy would not be degraded unless the rotations of the diverging laser beams are uneven for a short time of period from the reception of the diverging beam b1 to the reception of the diverging beam b3. Thus, an exemplary model where the diverging beam is detected three times during a single rotation of the rotary laser device is less influenced by an error caused by the uneven rotations than another exemplary model where the diverging beam is detected twice during the same period of time.

(2. 1. 5) Rotary Laser Device Emitting Diverging Laser Beams of Various Formats

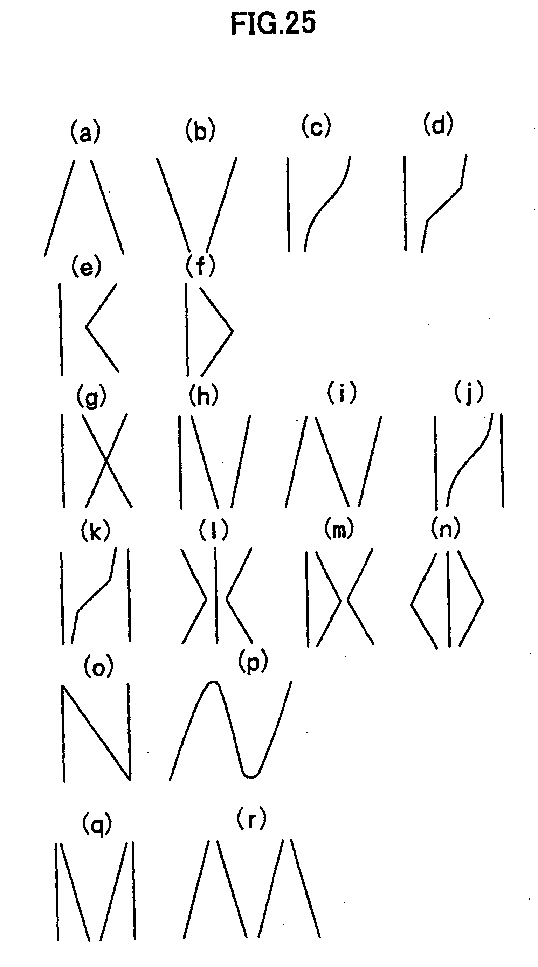

The above-mentioned embodiments include a type of the rotary laser device that emits three diverging laser beams b1, b2, and b3 generally arranged in an N-shape as in Fig. 2 and another type of the rotary laser device that emits two diverging laser beams b51 and b52 generally arranged in a V-shape as shown in Fig. 23, and the arrangement of the laser beams and the number of them can be varied as desired. Other examples of the arrangement of the diverging laser beams are depicted in Figs. 25(a) to 25(r). All the diverging laser beams can easily be implemented by appropriately altering the diffracting lattice 134 in Fig. 5.

As with the diverging laser beams as illustrated in Figs. 25(a) to 25(f), diverging laser beam is detected twice for a period of time during which the rotary laser device makes a single turn. Thus, the equations (8) to (10) and other modified formulas may be used to obtain the elevation-angle or depression-angle $\gamma$.

As to the diverging laser beams illustrated in Figs. 25(g) to 25(p), the light receiving unit 156 in the light sensor 154 detects the diverging laser beam three times for a period of time during which the rotary laser device makes a single rotation. Thus, the measurement principle explained in conjunction with the first preferred embodiment can be used to compute the elevation-angle or depression-angle $\gamma$.

For the diverging laser beams illustrated in Figs. 25(q) and 25(r), the diverging laser beam is detected four times for a period of time during which the rotary laser device 151 makes a single turn. Thus, selecting three out of the four detection results of the diverging beams and computing in relation with the selected beams, four ways of arithmetic operations can be carried out for the elevation-angle or depression-angle $\gamma$. Those results of the elevation-angle or depression-angle $\gamma$ can be averaged to enhance the measurement accuracy for the angle $\gamma$. Additionally, the number of the diverging laser beams is increased to get the increased number of data samples subjected to the averaging for the purpose of improving the measurement accuracy.

The diverging laser beams depicted in Figs. 25(c), 25(d), 25(j), and 25(k) include diverging laser beam featured with a moderate inclination close to the horizontal plane and a sudden steep inclination away from the horizontal plane, and hence, a rate of a variation in the elevation-angle or depression-angle $\gamma$ to a variation in the time delay between the receptions of the beams is altered from zone close to the horizontal plane to zone apart from the horizontal plane. This permits an enhanced sensitivity in measuring the elevation-angle or depression-angle $\gamma$ close to the horizontal plane.

Herein, an operation pattern in which the diverging laser beam is detected n times for a period of time during which the rotary laser device makes a single turn is referred to as "substantially n of the diverging laser beams".

(2. 1. 6) Rotary Laser Device Used with Batteries for Transmitting Rotational Angular Position

Another embodiment of the principle of measuring the rotational angular positions $\zeta$ and $\xi$ will now be described. In the first preferred embodiment, the laser beam S is used to transmit the information on the rotational angular position $\zeta$ from the rotary laser device 151 to the light sensor 154, and instead, the laser beam may herein be replaced with electric waves to transmit the information on the rotational angular position $\zeta$. In such a case, the optics incorporated in the projector 103 of the rotary laser device 11 to emit the laser beam S may be omitted. The optics used to emit the laser beam S is replaced with an electric wave transmitter (not shown) surrounded in a casing 101 of the rotary laser device 151 to transmit the information on the rotational angular position $\zeta$ to the light sensor 154. Correspondingly, the light sensor 154 is provided with an electric wave receiver (not shown) to receive the information on the rotational angular position $\zeta$ transmitted from the rotary laser device 151. Description of the light receiving unit 155 incorporated in the light sensor 154 to receive the laser beam S is omitted. The procedure of transmitting the information on the rotational angular position $\zeta$ is the same as in the first preferred embodiment except that a transmission medium is changed from laser beam to electric waves.

(2. 1. 7) Rotary Laser Device where Laser Beam is Shared between Use as Diverging Laser Beams and Use as Laser Beam Carrying Rotational Angular Position

Any of the diverging laser beams b1, b2, and b3 may be modulated to represent information on the rotational angular position so that the laser beam is shared between a use as the diverging laser beams and a use as the laser beam S carrying the rotational angular position.

(2. 2) Alternative Embodiment of Light Sensor

(2. 2. 1) Light Sensor Capable of Omnidirectionally Receiving Light

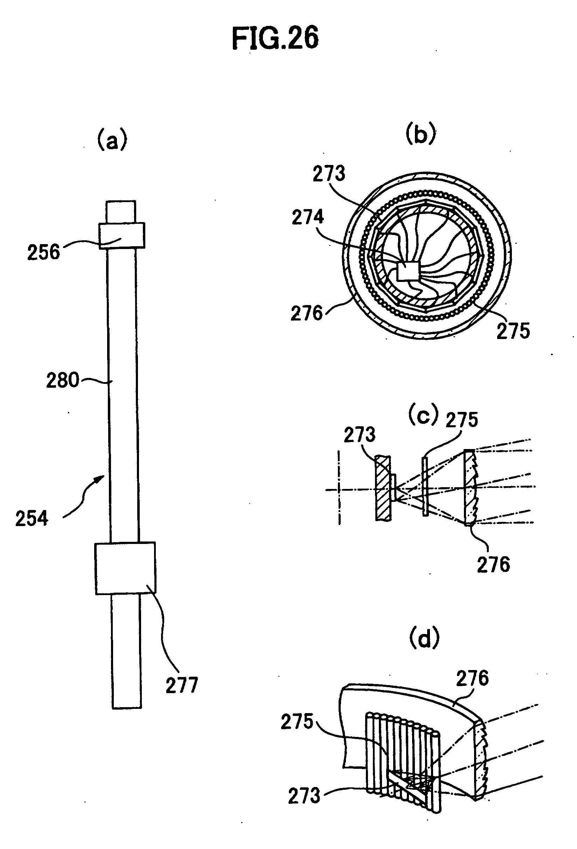

Figs. 26(a) to 26(d) show an embodiment of the light sensor 254 capable of omnidirectionally receiving light. As can be seen in Fig. 26(a), the omnidirectionally light sensor 254 has a supporting rod 280, a light receiving unit 256, and a light sensor controller 277. The light receiving nit 256 is attached to an upper portion of the supporting rod 280 while the light sensor controller 277 is affixed to a lower part of the supporting rod. Fig. 26(b) shows a top cross-sectional view showing the light receiving nit 256, Fig. 26(c) shows a side cross-sectional view, and Fig. 26(d) is a partially cut-away sectional view. Referring to Figs. 26(b) to 26(d), the light receiving unit 256 has an annular cylindrical Fresnel lens serving as a converging means, an annular fiber sheet 275, and a plurality of light receiving elements 273 deployed in an annular formation, and these components are all disposed along a concentric circle. Additionally, a light receiving element controller 274 is provided inside the light receiving elements 273 annularly disposed.

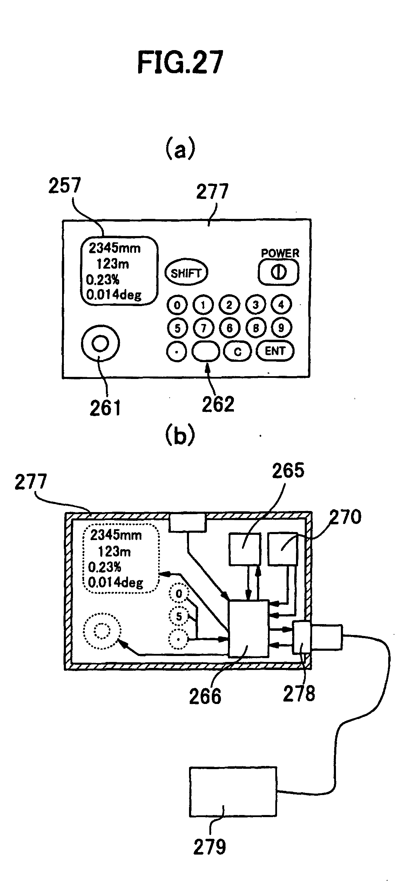

As shown in Fig. 27(a) and its cross-section of Fig. 27(b), the light sensor controller 277 includes a display 257, an alarm 261 such as a buzzer, entry keys 262, a memory 265, an operational unit 266, an electric wave receiver 270 receiving information on the rotational angular position, and an external communication unit 278. Further, the light sensor controller 277 can be connected to an external computer 279 via the external communication unit 278. The external computer 279 permits entry of data, display of measurement results, and subsequent processing of the measurement results.

When the diverging laser beam falls upon the light receiving unit 256, the diverging laser is converged through the fiber sheet 275 to the light receiving element 273 by the cylindrical Fresnel lens 276 having directivity in an elevating or depressing direction. Since the diverging beam converged by the cylindrical Fresnel lens 276 is scattered in horizontal directions by the fiber sheet 275, the incident diverging beam uniformly falls upon the light receiving element 273. With such a configuration, any disturbing light other than that having the directivity inherent to the cylindrical Fresnel lens 276 would not fall upon the light receiving element 273, and hence, a S/N ratio of a light sensing signal developed by the reception of the incident diverging beam can be enhanced. The light receiving elements 273 are connected to the light receiving element controller 274 in parallel with each other to determine a condition of light incident upon the light receiving elements 273, and then, circuitry of any of the light receiving elements 273 receiving no incident diverging beam is broken to further improve the S/N ratio of the light sensing signal.

When the incident diverging laser beam falls upon the light receiving elements 273, the light sensing signal is transmitted to the light receiving element controller 274. The light receiving element controller 274 built in the light receiving unit 256 transmits the light sensing signal to the light sensor controller 277. Processing of the signal in the light sensor controller 277 is the same as the processing of the signal in the light sensor 154.

**Claims**

1. A position determining system comprising:

   at least two rotary laser devices (151, 152), said rotary laser devices being disposed separately from each other and each including rotary means (105) for emitting at least three diverging laser beams, an encoder (117) for detecting a rotation position of said rotary means (105), and transfer means (172) for transmitting via an Information laser beam data on the detected rotation position detected by said encoder; and
   a light sensor (154) including light receiving means (155, 156) for receiving said diverging laser beams emitted from said rotary means (105) and operational means (166) for computing a three-dimensional position of said light sensor (154) on the basis of time intervals between receipt of said diverging laser beams and said data transmitted from said transfer means (172).

2. A position determining system according to claim 1, wherein said operational means (166) computes a three-dimensional position of said light sensor (154) on the basis of the predetermined distances between said rotary laser devices, the rotation position of said rotary means (105) transmitted from said transfer means (172), and elevation- or depression- angles derived from said diverging laser beams.

3. A position determining system according to claim 1, wherein said diverging laser beams are modulated by said data of rotation position and said data are transmitted to said light sensor (154) by means of said diverging laser beams

4. A position determining system according to claim 1, wherein said light receiving means (155, 156) may be shared between a use for said diverging laser beams in detecting the elevation- or depression-angle of the light sensor (154) and a use for said laser beam transmitting said date of rotation position.

5. A position determining system according to claim 1, wherein said information laser beam emitted from said transfer means (172) is modulated with said date of rotation position.

6. A position determining system according to claim 1, wherein each of the rotary laser devices (151, 152) further includes respective reflecting means (153b) for reflecting said diverging laser beams emitted from another of said rotary laser devices (151, 152), light receiving means (153a) for receiving the beams reflected from said reflecting means (1 53b), and calculating means for determining a rotational reference position of one of said rotary laser devices (151,152) on the basis of the reflected beams received by said light receiving means (153a).

7. A position determining system according to claim 1, wherein each of said rotary laser devices (151, 152) further includes light receiving means (153a) for receiving said diverging laser beams emitted from another of said rotary laser devices (151,152), and light emitting means for emitting light when said light receiving means (153a) receives said diverging laser beams, and said light sensor (154) further includes determining means for determining a rotational reference position of one of said rotary laser devices (151, 152) on the basis of the light emitted from said light emitting means and the data transmitted from said transfer means (172).

**Patentansprüche**

1. Eine Vorrichtung zur Positionsbestimmung umfassend:

   wenigstens zwei sich drehende Laservorrichtungen (151, 152), wobei die sich drehenden Laservorrichtungen getrennt voneinander angeordnet sind und jede ein sich drehendes Mittel (105) zum Emittieren von wenigstens drei divergierenden Laserstrahlen enthält, einen Codierer (117) zum Detektieren einer Drehposition des sich drehenden Mittels (105), und Übertragungsmittel (172) zum Übertragen von Daten über die detektierte Drehposition, die von dem Codierer detektiert wird, über einen Informationsla.serstrahl; und
   einen Lichtsensor (154), der Lichtempfangsmittel (155, 156), um die divergierenden Laserstrahlen zu empfangen, die von den Drehmitteln (105) emittiert werden, und Betriebsmittel (166) enthält, um eine dreidimensionale Position des Lichtsensors (154) auf der Basis des Zeitintervalls zwischen dem Empfang der divergierenden Laserstrahlen und der Daten berechnet, die von den Übertragungsmitteln (172) übertragen werden.

2. Eine Vorrichtung zur Positionsbestimmung nach Anspruch 1, worin das Betriebsmittel (166) eine dreidimensionale Position des Lichtsensors (154) auf der Basis der vorbestimmten Abstände zwischen den sich drehenden Laservorrichtungen, der Drehposition des sich drehenden Mittels (105), die von den Übertragungsmitteln (172) übertragen wird, und aus Elevations- oder Depressionswinkeln berechnet, die von den divergierenden Laserstrahlen abgeleitet werden.

3. Eine Vorrichtung zur Positionsbestimmung nach Anspruch 1, worin die divergierenden Laserstrahlen durch die Daten der Drehposition moduliert werden und die Daten an den Lichtsensor (154) mittels der divergierenden Laserstrahlen übertragen werden.

4. Eine Vorrichtung zur Positionsbestimmung nach Anspruch 1, worin die Lichtempfängsmittel (155, 156) gemeinsam für eine Benutzung der divergierenden Laserstrahlen zum Detektieren des Elevations- oder Depressionswinkel des Lichtsensors (154) und für eine Benutzung des Laserstrahles zum Übertragen der Daten der Drehposition benutzt werden.

5. Eine Vorrichtung zur Positionsbestimmung nach Anspruch 1, worin der Informationslaserstrahl, der von dem Übertragungsmittel (172) emittiert wird, mit den Daten der Drehposition moduliert ist.

6. Eine Vorrichtung zur Positionsbestimmung nach Anspruch 1, worin jede der sich drehenden Laservorrichtungen (151, 152) ferner jeweils reflektierende Mittel (153 b) zum Reflektieren der divergierenden Laserstrahlen, die von einem anderen der sich drehenden Laservorrichtungen (151, 152) emittiert werden, Lichtempfangsmittel (153 a) zum Empfangen der Strahlen, die von den reflektierenden Mitteln (153 b) reflektiert werden, und Berechnungsmittel zum Bestimmen einer Drehreferenzposition von einem der sich drehenden Laservorrichtungen (151, 152) auf der Basis der reflektierten Strahlen, die von den lichtempfangenden Mitteln (153 a) empfangen werden, enthält.

7. Eine Vorrichtung zur Positionsbestimmung nach Anspruch 1, worin jede der sich drehenden Laservorrichtungen (151, 152) ferner lichtreflektierende Mittel (153 a) zum Empfangen der divergierenden Laserstrahlen, die von einem anderen der sich drehenden Laservorrichtungen (151, 152) emittiert werden, und lichtemittierende Mittel zum Emittieren von Licht enthält, wenn das lichtempfangende Mittel (153 a) die divergierenden Laserstrahlen empfängt, und ferner der Lichtsensor (154) Bestimmungsmittel enthält, um eine Drehreferenzposition von einer der sich drehenden Laservorrichtungen (151, 152) auf der Basis des Lichts, das von den lichtemittierenden Mitteln emittiert wird, und den Daten, die von den Übertragungsmitteln (172) übertragen werden, bestimmt.

**Revendications**

1. Système de détermination de la position, comprenant:

   - au moins deux dispositifs rotatifs à laser (151, 152), lesdits dispositifs rotatifs à laser étant disposés séparément l'un de l'autre et chacun d'eux incluant des moyens de rotation (105) pour l'émission au moins de trois rayons laser divergents, un codeur (117) pour la détection de la position de rotation desdits moyens rotatifs (105) et des moyens de transfert (173) pour la transmission par un rayon laser d'information des données concernant la position de rotation détectée par ledit codeur; et
   - un senseur de lumière (154) incluant des moyens recevant la lumière (155, 156) pour la réception desdits rayons laser divergents émis desdits moyens de rotation (105) et des moyens opérationnels (166) pour calculer une position tridimensionnelle dudit senseur de lumière (154) sur la base des intervalles de temps entre la réception desdits rayons laser divergents et lesdites données transmises desdits moyens de transfert (172).

2. Système de détermination de la position selon la revendication 1, où lesdits moyens opérationnels (166) calculent une position tridimensionnelle dudit senseur de lumière (154) sur la base des distances prédéterminées entre lesdits dispositifs rotatifs à laser, la position de rotation desdits moyens rotatifs (105) transmise desdits moyens de transfert (172) et les angles d'élévation ou de dépression dérivés desdites rayons laser divergents.

3. Système de détermination de la position selon la revendication 1, où lesdits rayons laser divergents sont modulés par lesdites données de la position de rotation et lesdites données sont transmises audit senseur de lumière (154) par lesdits rayons laser divergents.

4. Système de détermination de la position selon la revendication 1, où lesdits moyens recevant la lumière (155, 156) peuvent être partagés entre une utilisation pour lesdits rayons laser divergents pour la détection de l'angle d'élévation ou de dépression du senseur de lumière (154) et une utilisation pour ledit rayon laser transmettant lesdites données de la position de rotation.

5. Système de détermination de la position selon la revendication 1, où ledit rayon laser d'information émis desdits moyens de transfert (172) est modulé avec lesdites données de la position de rotation.

6. Système de détermination de la position selon la revendication 1, où chacun desdits dispositifs rotatifs à laser (151, 152) comprend en outre les moyens de réflexion respectifs (153b) pour la réflexion desdits rayons laser divergents émis d'un autre dispositif desdits dispositifs rotatifs à laser (151, 152), les moyens recevant la lumière (153a) pour la réception des rayons réflectés desdits moyens de réflexion (153b) et les moyens de calcul pour la détermination d'une position rotative de référence d'un desdits dispositifs rotatifs à laser (151, 152) sur la base des rayons reflétés reçus par lesdits moyens recevant la lumière (153a).

7. Système de détermination de la position selon la revendication 1, où chacun desdits dispositifs rotatifs à laser (151, 152) comprend en outre des moyens recevant la lumière (153a) pour la réception desdits rayons laser divergents émis d'un autre desdits dispositifs rotatifs à laser (151, 152) et des moyens émettant la lumière pour l'émission de la lumière quand lesdits moyens recevant la lumière (153a) reçoivent lesdits rayons laser divergents et ledit senseur de lumière (154) comprend en outre des moyens de détermination pour la détermination de la position rotative de référence de l'un desdits dispositifs rotatifs à laser (151, 152) sur la base de la lumière émise desdits moyens émettant la lumière et lesdites données transmises desdits moyens de transfert (172).

# FIG.1

FIG.2

## FIG.3

# FIG.4

# FIG.5

## FIG.6

## FIG.7

## FIG.8

## FIG.9

# FIG.10

# FIG.11

# FIG.12

S1 REFERENCE SIGNAL    S2 DIGITIZED ANGULAR DATA    S1 REFERENCE SIGNAL    S2 DIGITIZED ANGULAR DATA    S1 REFERENCE SIGNAL

(a) ROTATIONAL ANGULAR POSITION SIGNAL

TIME DIFFERENCE

(b) DIVERGING BEAM

EP 1 195 615 B1

# FIG.13

# FIG.14

F1 — DISPOSE ROTARY LASER DEVICES 151 & 152 AT AN INTERVAL OF DISTANCE L.

F2 — SET REFERENCE ORIENTATIONS OF LOTARY LASER DEVICES 151 & 152 SO AS TO COINCIDE WITH THE REFERENCE ORIENTATION OF INCLINED PLANE.

F3 — ENTER COMPOSITE INCLINATION DETERMINING VALUES $\alpha$% & $\beta$% ON LIGHT RECEIVING SENSOR.

F4 — DETERMINE X-Y COORDINATE AT A POINT WHERE LIGHT RECEIVING SENSOR IS LOCATED AND VERTICALLY TRANSLATE THE POINT TO OBTAIN Z COORDINATE $z_0$ IN THE INCLINED PLANE.

F5 — FIND Z COORDINATE $z$ AT THE POINT WHERE LIGHT RECEIVING SENSOR IS LOCATED TO OBTAIN A DIFFERENCE $\Delta z$ BETWEEN $z$ AND $z_0$.

F6 — MAKE LIGHT RECEIVING SENSOR DISPLAY AN EXPRESSION WHERE ZERO IS SUBSTITUTED FOR $\Delta z$.

FIG.15

EP 1 195 615 B1

# FIG.16

# FIG.17

# FIG.18

# FIG.19

FIG.20

(a)

(b)

(c)

# FIG.21

FIG.22

# FIG.23

EP 1 195 615 B1

# FIG.24

# FIG.25

# FIG.26

(a)

256

280

254

277

(b)

273

274

276

275

(c) 275

273

276

(d)

276

275

273

# FIG.27

(a)

(b)

# FIG.28
## (PRIOR ART)